Europäisches Patentamt

European Patent Office

Office européen des brevets

(19)

(11) Veröffentlichungsnummer: **0 037 461**
**B1**

(12) **EUROPÄISCHE PATENTSCHRIFT**

(45) Veröffentlichungstag der Patentschrift:
**27.07.83**

(21) Anmeldenummer: **81101492.7**

(22) Anmeldetag: **02.03.81**

(51) Int. Cl.³: **A 61 C 13/20,** H 05 B 3/00

(54) **Gerät zum Bestrahlen von Zahnersatzteilen.**

(30) Priorität: **17.03.80 DE 8007265 U**

(43) Veröffentlichungstag der Anmeldung:
**14.10.81 Patentblatt 81/41**

(45) Bekanntmachung des Hinweises auf die Patenterteilung:
**27.07.83 Patentblatt 83/30**

(84) Benannte Vertragsstaaten:
**AT CH DE FR GB LI**

(56) Entgegenhaltungen:
**DE-A-1 516 450**
**DE-A-2 205 558**
**US-A-2 354 658**
**US-A-3 627 590**

(73) Patentinhaber: **Espe Fabrik pharmazeutischer Präparate GmbH, D-8031 Seefeld / Obb (DE)**

(72) Erfinder: **Herold, Wolf-Dietrich, Seestrasse 16, D-8031 Hechendorf (DE)**

(74) Vertreter: **Schübel-Hopf, Ursula, Strehl, Schübel-Hopf, Schulz Patentanwälte Widenmayerstrasse 17, D-8000 München 22 (DE)**

BUNDESDRUCKEREI BERLIN

## Gerät zum Bestrahlen von Zahnersatzteilen

In der Dentalpraxis lassen sich zur Herstellung von Zahnersatzteilen, wie Kronen, einzelnen Zähnen, Brücken, Gebißteilen oder ganzen Gebissen, gewisse Massen verwenden, die aufgrund der Eigenfarbe von in ihnen enthaltenen Polymerisationsinitiatoren einen unerwünschten Gelbstich aufweisen, der sich jedoch mittels einer anschließenden Bestrahlung durch eine irreversible Reaktion dauerhaft auf einen der natürlichen Zahnfarbe entsprechenden Farbton bleichen läßt. Typischerweise wird für diesen Bleichvorgang eine Strahlung in einem Bereich von ca. 400 nm bis ca 500 nm (bei einem maximum von ca. 460 nm) benötigt, wobei der Bestrahlungsvorgang über eine längere Zeitspanne von beispielsweise 30 min durchzuführen ist. Diese Bestrahlung ergibt gleichzeitig eine erwünschte Nachpolymerisation des Materials.

Aus der deutschen Offenlegungsschrift Nr. 2 901 534 ist ein Bestrahlungsgerät zum Einsatz im Dentalbereich bekannt, daß zum Aushärten von Kunststoff-Zahnfüllungen mit einer Strahlung im UVA-Spektralbereich (ca. 320 nm bis ca. 400 nm) oder auch im UVA-nahen sichtbaren Spektralbereich (ca. 400 nm bis ca. 500 nm) arbeitet. Um die Strahlung auf den begrenzten Ort einer Zahnfüllung im Mund eines Patienten zu lenken, wird der in dem gewünschten Wellenlängenbereich gelegene Anteil der von einer Lampe emittierten Strahlung über einen selektiv reflektierenden Ellipsoidspiegel auf einen im Eintrittsende eines Lichtleiters gelegenen Brennpunkt fokussiert und durch den Lichtleiter über eine Zeitspanne von beispielsweise 20 bis 30 s auf die zu bestrahlende Stelle gerichtet. Während dieser verhältnismäßig kurzen Bestrahlungszeit wird das bekannte Gerät vom Zahnarzt mit der Hand geführt. Der selektiv reflektierende Spiegel des bekannten Gerätes sorgt dafür, daß nur die Nutzstrahlung in den Lichtleiter gelangt, während kürzer-wellige, gefährliche Strahlung wie auch die von der Lampe insbesondere erzeugte Wärmestrahlung von dem Reflektor nach hinten transmittiert wird.

Das bekannte Gerät ist wegen seiner Gestaltung als Handgerät in Verbindung mit der jeweils kurzen Betriebsdauer und der Auslegung für die frontale Bestrahlung sehr begrenzter Behandlungsorte für den hier in Rede stehenden Zweck einer Bleichbehandlung ungeeignet.

Der Erfindung liegt die Aufgabe zugrunde, ein Gerät zum Bestrahlen von Zahnersatzteilen zu schaffen, da bei möglichst vollständiger Ausbeute der erzeugten Nutzstrahlung eine möglichst gleichmäßige Bestrahlung im wesentlichen der gesamten Oberfläche des jeweiligen Objektes während einer verhältnismäßig langen Zeitspanne bei einfachem Aufbau und einfacher Handhabung des Gerätes gestattet.

Die erfindungsgemäße Lösung dieser Aufgabe ist im Patentanspruch 1 gekennzeichnet. Die danach vorgesehene Anordnung der Aufnahme für die jeweils zu bestrahlenden Zahnersatzteile und der Strahlungsquelle zwischen zwei einander zugewandten Reflektoren, von denen der eine die Lichtquelle und der andere die Aufnahme umgibt, bewirkt einerseits ein »Einfangen« und damit eine vollständige Ausnutzung der Nutzstrahlung und andererseits eine gleichmäßige Bestrahlung sämtlicher freien Oberflächen der Behandlungsobjekte, ohne daß dazu eine Rotation oder sonstige Bewegung der Aufnahme mit den Zahnersatzteilen erforderlich wäre.

Aus der US-Patentschrift Nr. 2 354 658 ist ein Gerät zur Behandlung von länglichen Gegenständen mit Strahlungswärme bekannt, bei dem die von ein oder mehreren Strahlungsquellen ausgehende Strahlung durch eine entsprechende Anzahl von paraboloidförmigen Reflektoren zu einem parallelen Strahlenbündel geformt und durch eine Gruppe von gegenüberstehenden ebenfalls paraboloidförmigen Reflektoren auf eine Anzuahl von Brennpunkten fokussiert wird. Durch diese Brennpunkte werden die zu behandelnden Werkstücke geführt und der dort konzentrierten Wärmestrahlung ausgesetzt. Das bekannte Gerät arbeitet mit Vollreflektoren, die die gesamte von der Quelle abgegebene Strahlung reflektieren.

Im Gegensatz zu diesem bekannten Gerät kommt es bei der Erfindung darauf an, Zahnersatzteile nur mit einem gewünschten, ausgewählten, unterhalb etwa 500 nm liegenden Spektralbereich zu bestrahlen, so daß eine wesentliche Erwärmung des Bestrahlungsobjektes vermieden wird. Eine zu starke Erwärmung führt nämlich dazu, daß der Kunststoff der Zahnersatzteile zerstört wird. Ferner kann wegen der unterschiedlichen thermischen Expansionskoeffizienten von Metall und Kunststoff die Verbindung an den Trennflächen zwischen dem Metallträgergerüst und dem Kunststoffteil beeinträchtigt oder gar gelöst werden. Bei dem erfindungsgemäßen Gerät ist es daher erwünscht, die Temperatur am Bestrahlungsobjekt unter etwa 50°C zu halten. Da jedoch die verwendete Lampe einen erheblichen Anteil an Wärmestrahlung erzeugt, ist die im Patentanspruch 1 genannte selektiv transmittierende Eigenschaft mindestens eines Reflektors für die Erfindung von Bedeutung. Im weiteren Gegensatz zum Stand der Technik soll bei der Erfindung das Bestrahlungsobjekt nicht fokussiert, also konzentriert, sondern möglichst gleichmäßig von allen Seiten bestrahlt werden. Dies wird gemäß einem weiteren kennzeichnenden Merkmal des Patentanspruchs 1 dadurch erreicht, daß der zweite Reflektor als flächig ausleuchtender, reflektierender hohler Spiegel ausgebildet ist.

Aus der US-Patentschrift Nr. 3 627 590 und aus der deutschen Offenlegungsschrift Nr. 2 205 558 sind weitere Geräte zur Wärmebehandlung von Werkstücken bekannt, bei denen zwei ellipsoidförmige Reflektoren einander gegenüber angeordnet sind, wobei im Brennpunkt des einen Reflektors die Strahlungsquelle und im Brennpunkt des anderen Reflektors das Behandlungsobjekt angeordnet ist. Auch hier geht es wieder darum, die von der Strahlungsquelle erzeugte Wärme mittels Vollreflektoren möglichst vollständig auf das Behandlungsobjekt zu konzentrieren. Auch diese bekannten Geräte stehen der Erfindung nach Aufgabe und Lösung nicht nahe.

Bei der Weiterbildung der Erfindung nach Patentanspruch 2 wird erreicht, daß UV-Strahlung vom Behandlungsobjekt abgehalten wird. Die Weiterbildung nach Patentanspruch 3 ist für eine möglichst gleichmäßige Bestrahlung, die Weiterbildung nach Patentanspruch 4 für eine hohe Ausnutzung der Strahlung günstig. Die Ausgestaltung nach den Patentansprüchen 5 und 6 vermeidet weiterhin eine Erwärmung insbesondere des Bestrahlungsobjekts, während die Gestaltung nach Patentanspruch 7 dann von Vorteil ist, wenn größere Gebißteile behandelt und dabei auch die inneren Zahnflächen mit ausreichender Strahlung beaufschlagt werden sollen.

Die Weiterbildung der Erfindung nach Patentanspruch 8 ermöglicht es, lediglich die Lampe als das eigentliche Verschleißteil auszuwechseln, zumal es auf eine exakte Positionierung der Lampe relativ zu den Reflektoren nicht ankommt.

In der Weiterbildung der Erfindung nach Patentanspruch 9 ist dafür gesorgt, daß der Lampensockel nicht zu heiß wird, was infolge des hängenden Einbaus der Lampe zu Beschädigungen der Lampe führen könnte.

Die Weiterbildung nach Patentanspruch 11 ergibt einen vom Standpunkt der praktischen Handhabung, der Reinigung und der Lichtdichtigkeit des Gerätes besonders günstigen Aufbau.

Die in den Ansprüchen 10 und 12 bis 14 vorgesehene Evakuierung des Behandlungsortes ist bei der Bestrahlung von Materialien von Bedeutung, deren Polymerisation durch den Luftsauerstoff inhibiert wird, so daß sich in der Gegenwart von Luftsauerstoff an der Oberfläche während des Polymerisations- und Bleichvorganges eine unerwünschte Schmierschicht ausbildet.

Die Weiterbildung der Erfindung nach Patentanspruch 15 ergibt eine automatische Abschaltung des Gerätes nach einer einstellbaren Bestrahlungsdauer.

In den Ausgestaltungen nach den Patentansprüchen 16 und 17 wird sichergestellt, daß die jeweils vorgesehene Dauer der Bestrahlung weder überschritten noch — was insbesondere bei einem Versagen der Lampe passieren könnte — unterschritten wird.

Bevorzugte Ausführungsbeispiele der Erfindung werden nachstehend anhand der Zeichnungen näher erläutert. In den Zeichnungen zeigen

Fig. 1 eine Frontansicht eines Bestrahlungsgerätes,

Fig. 2 einen schematischen Vertikalschnitt,

Fig. 3 einen schematischen Horizontalschnitt durch das Gerät nach Fig. 1 und

Fig. 4 und 5 der Fig. 2 ähnliche Darstellungen von Varianten des Bestrahlungsgerätes.

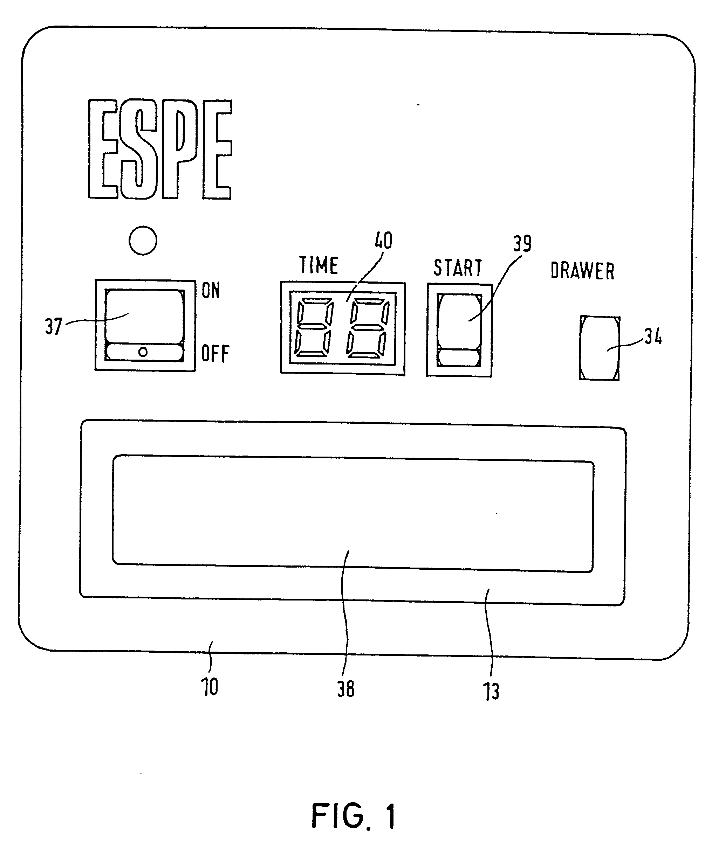

Gemäß Fig. 1 bis 3 umfaßt das Bestrahlungsgerät ein Gehäuse 10, in dem eine Lampe 11 mit einem ersten Reflektor 12, ein in einer Schublade 13 angeordneter zweiter Reflektor 14, eine elektrische Steuerschaltung 15 und ein Lüfter 16 untergebracht sind. Der Reflektor 12 hat eine paraboloidform und weist einen zentrischen Flansch 17 mit einer Öffnung auf, durch die die Lampe 11 hindurchragt. Bei der Lampe 11 handelt es sich vorzugsweise um eine Halogen-Wolfram-Niederspannungslampe, wie sie etwa auch für Kino- und Dia-Projektoren verwendet wird. Die Lampe 11 ist in eine oberhalb des Flansches 17 angeordnete Fassung 18 eingesteckt, die durch eine in der oberen Fläche des Gehäuses 10 vorgesehene Öffnung 19 hindurch zugänglich ist. Die Öffnung 19 ist durch eine Schraube 20 verschließbar. Zum Auswechseln der Lampe 11 wird die Schraube 20 geöffnet und die Lampe mit ihrer Fassung 18 durch die Öffnung 19 des Gehäuses hindurch nach oben herausgenommen. Ein Schalter 21 sorgt dafür, daß die Stromzuleitung zur Lampe 11 unterbrochen ist, solange sich die Fassung 18 nicht in ihrer vorgeschriebenen Stellung befindet.

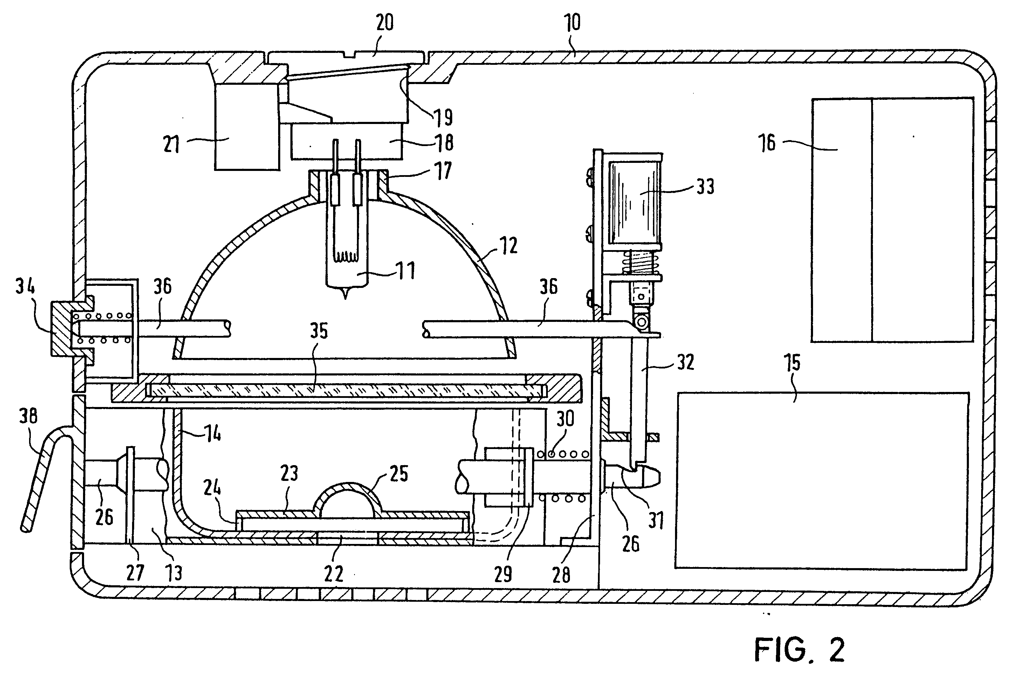

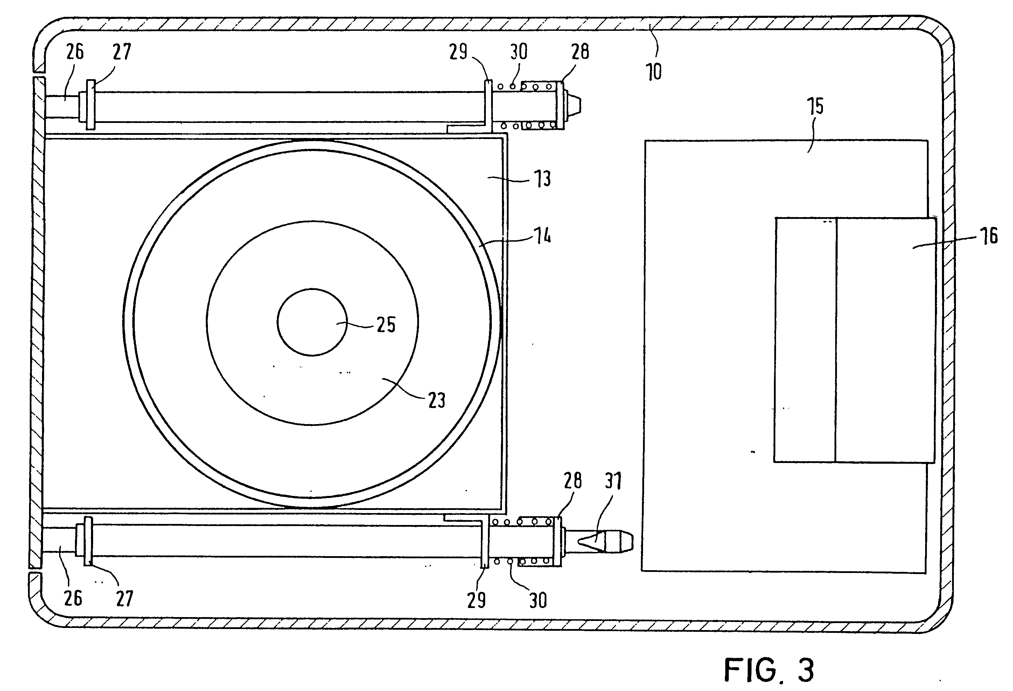

Die Schublade 13 ist in Fig. 1 bis 3 in ihrer völlig eingeschobenen Stellung gezeigt. Gemäß Fig. 2 und 3 ist in die Schublade 13 der etwa topf-förmige zweite Reflektor 14 eingesetzt, dessen obere kreisförmige Öffnung die gleiche Größe hat wie die nach unten gerichtete Öffnung des paraboloidförmigen ersten Reflektors 12, wobei die beiden Öffnungen im völlig eingeschobenen Zustand der Schublade 13 miteinander fluchten. In seinem unteren Teil weist der zweite Reflektor 14 eine Lüftungsöffnung 22 auf. Die Öffnung 22 wird von einem als Aufnahme der zu bestrahlenden Zahnersatzteile dienenden Tisch 23 verdeckt, der durch Stützen 24 in Abstand von der unteren Fläche des Reflektors 14 gehalten ist. Der Tisch 23 besteht aus gut reflektierendem Material und weist in seiner Mitte einen konvexen, halbkugelförmigen Vorsprung 25 auf. Diese Gestaltung des Aufnahmetisches 23 gestattet einerseits den Luftdurchtritt durch die Öffnung 22, verhindert andererseits weitgehend das Austreten von Strahlung durch die Öffnung 22.

Gemäß Fig. 2 und 3 ist die Schublade 13 seitlich mit Führungsstangen 26 versehen, die Bohrungen von in der Nähe der Gehäusevorderseite angeordneten Anschlagelementen 27 durchsetzen und im eingeschobenen Zustand der Schublade mit ihren nach hinten herausragenden freien Enden durch in Führungselementen 28 vorgesehene Bohrungen hindurchgreifen. Zwischen den gehäusefesten Führungselementen 28 und an der Schublade angebrachten Anschlagteilen 29 sind Schraubenfedern 30 angeordnet, die die Schublade 13 in Richtung ihrer Öffnungsbewegung vorspannen. In Verbindung mit den gehäusefesten Anschlagelementen 27 haben die an der Schublade 13 angebrachten Anschlagteile 29 ferner die Aufgabe, die Öffnungsbewegung der Schublade zu begrenzen.

Eine der beiden Führungsstangen 26 ist an ihrem hinteren freien Ende mit einer Kerbe 31 versehen, in die im völlig eingeschobenen Zustand der Schublade 13 das Ende einer Arretierungsstange 32 eingreift. Die Arrtierungsstange 32 läßt sich durch einen Elektromagnet 33 oder über eine Stange 36 durch eine an der Frontplatte des Gehäuses (Fig. 1) angeordnete Drucktaste 34 gemäß Fig. 2 derart verschieben, daß sie aus der Kerbe 31 ausrastet und dabei die Schublade 13 zum Öffnen unter Entspannung der Feder 30 freigibt.

Der die Lampe 11 umgebende obere Reflektor 12 ist vorzugsweise als selektierender Reflektor ausgebildet, so daß er aus der von der Lampe 11 abgegebenen Gesamtstrahlung nur den im gewünschten Wellenlängenbereich (ca. 400 bis 500 nm) liegenden Spektralteil reflektiert, den übrigen, außerhalb dieses Spektralbereichs liegenden Anteil der Strahlung dagegen transmittiert. Ein solcher Reflektor besteht beispielsweise aus einem Quarzglas-Trägerkörper, auf dessen Innenfläche ein in dem Nutz-Wellenlängenbereich reflektierendes Dünnschichtfilter aufgedampft ist. Ein derartiger selektierender Reflektor ist insbesondere deshalb von Vorteil, weil ein großer Teil der von der verwendeten Wolfram-Halogen-Lampe emittierten Strahlung oberhalb von 500 nm liegt und zu einem erheblichen Teil unerwünschte Wärmestrahlung darstellt.

Infolge der Paraboloidform des Reflektors 12 wird die Nutzstrahlung der Lampe 11 senkrecht nach unten reflektiert. Der untere Reflektor 14 besteht in diesem Fall aus Aluminium und kann eine gerauhte Oberfläche aufweisen, so daß er die einfallende Strahlung diffus reflektiert. Dadurch wird die Nutzstrahlung der Lampe 11 in allen möglichen Richtungen zwischen den beiden Reflektoren 12 und 14 hin- und hergespiegelt, so daß praktisch die gesamte Nutzstrahlung das auf dem Tisch 23 angeordnete Bestrahlungsobjekt erreichen kann. Der zentrische reflektierende Vorsprung 25 des Tisches 23 dient dazu, eine Bestrahlung auch der Innenfläche größerer Gebißteile zu gewährleisten.

Es kann zweckmäßig sein, an der unteren Öffnung des oberen Reflektors 12 ein Absorptionsfilter 35 anzuordnen, das nur die gewünschte Nutzstrahlung transmittiert, die übrigen Spektralbereiche dagegen absorbiert. Dies gilt insbesondere für den Fall, daß der obere Reflektor 12 nicht als selektierender Reflektor ausgebildet ist, sondern die Gesamtstrahlung der Lampe 11 reflektiert. Anstelle des Absorptionsfilters 35 oder auch zusätzlich kann der untere Reflektor 14 als selektierender Reflektor ausgebildet sein.

Der in dem Gehäuse 10 untergebrachte Lüfter 16 dient dazu, die Reflektoren 12 und 14 zu kühlen, sowie eine Luftströmung durch den Abstand zwischen den beiden Reflektoren, den das Bestrahlungsobjekt enthaltenden Raum im Innern des unteren Reflektors 14 und durch dessen untere Öffnung 22 hindurch zu erzeugen. Die Anwendung einer derartigen Lüftung sowie die Verwendung wenigstens eines selektiven Reflektors und gegebenenfalls eines Absorptionsfilters verhindern in wirksamer Weise eine unerwünschte Aufheizung des Bestrahlungsobjekts. Da das Absorptionsfilter 35 in dem von dem Luftstrom durchsetzten Abstand zwischen den beiden Reflektoren angeordnet ist, wird es selbst gut gekühlt. Der Lüfter 16 hat ferner die Aufgabe, den Sockel der Lampe 11 zu kühlen. Die Kühlung ist von Bedeutung, weil in dem gezeigten hängenden Einbau der Lampe 11 eine unzulässige Erwärmung des Lampensickels auftreten kann, die die Lampe beschädigt. Ein von dem Lüfter 16 erzeugter Luftstrom gelangt dabei durch den zwischen der Oberseite des Filters 35 und dem unteren Rand des Reflektors 12 vorgesehenen Abstand in das Innere des Reflektors 12, strömt an der Lampe 11 vorbei und tritt durch den zwischen dem oberen Rand des Flansches 17 und der Unterseite der Fassung 18 bestehenden Luftspalt wieder aus.

Bei einer Ausführungsform des Gerätes, bei der das Absorptionsfilter 35 nicht vorgesehen ist, kann der von dem Lüfter 16 erzeugte Luftstrom unmittelbar von der unteren Lüftungsöffnung 22 durch das Innere der beiden Reflektoren 12 und 14 verlaufen, an der Lampe 11 entlangstreichen und durch den Spalt zwischen dem Flansch 17 und der Fassung 18 austreten.

Zum Betrieb des Gerätes wird zunächst der an der Frontplatte (Fig. 1) des Gehäuses angeordnete Netzschalter 37 eingeschaltet. Sodann wird die Schublade 13 durch Betätigen der Drucktaste 34 geöffnet und mittels des Handgriffs 38 herausgezogen. Das zu behandelnde Zahnersatzteil wird auf den im unteren Reflektor 14 befindlichen Tisch 23 aufgelegt, und die Schublade wird geschlossen. Durch Betätigen des an der Frontplatte des Gehäuses ferner vorgesehenen Startschalters 39 wird die Lampe 11 eingeschaltet. Gleichzeitig wird ein in der Steuerschaltung 15 vorgesehener Zeitzähler in Rang gesetzt, der eine an der Frontplatte des Gehäuses vorgesehene Digitalanzeige 40 steuert. Nach Ablauf der vorgegebenen Zeitspanne schaltet die Steuerschaltung 15 die Stromversorgung für die Lampe 11 ab und beaufschlagt gleichzeitig den Elektromagnet 33, der die Arretierungsstange 32 anhebt, so daß die Schublade freigegeben wird und unter der Wirkung der Feder 30 aufspringt. Das fertig behandelte Zahnersatzteil kann dann entnommen werden.

Sollte während eines Behandlungsvorgangs die Lampe 11 ausfallen, so stellt die Steuerschaltung 15 die Unterbrechung des Stromflusses durch den Lampenfaden fest und hält den Zeitzähler und damit auch die Digitalanzeige 40 an. In diesem Fall bleibt die Schublade 13 geschlossen. Um der Bedienungsperson ein Signal über den Ausfall der Lampe zu vermitteln, wird die Digitalanzeige mit einem pulsierenden Strom beaufschlagt, so daß sich ein Blinksignal ergibt. Zusätzlich oder alternativ kann auch ein hörbares Signal erzeugt werden. Die Bedienungsperson wird dann die Lampe auswechseln und durch erneute Betätigung des Startschalters 39 die Wiedereinschaltung der Lampe 11 und die Fortsetzung des Zeitzyklus bewirken. Dadurch wird verhindert, daß bei Ausfall der Lampe das Bestrahlungsobjekt in unkontrollierbarer Weise ungenügend bestrahlt wird.

Um ferner eine vorzeitige Entnahme des Bestrahlungsobjektes zu verhindern, kann in einer Variante die Drucktaste 34 statt direkt auf die Arretierungsstange 32 auf einen im Versorgungskreis des Elektromagneten 33 befindlichen Schalter wirken, der bei laufendem Zeitzyklus von der Steuerschaltung 15 unwirksam gemacht wird.

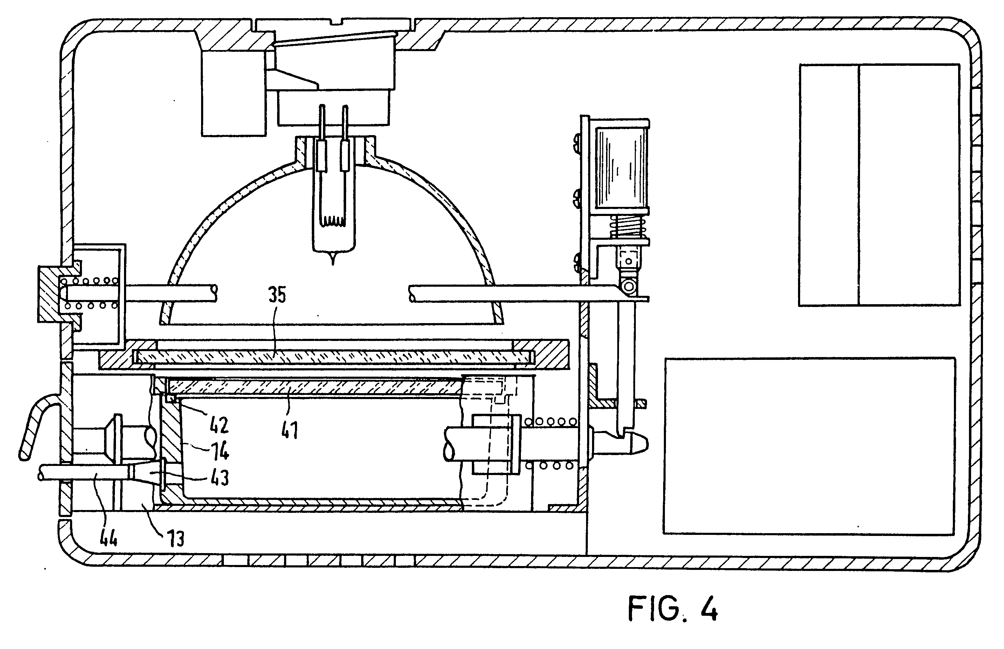

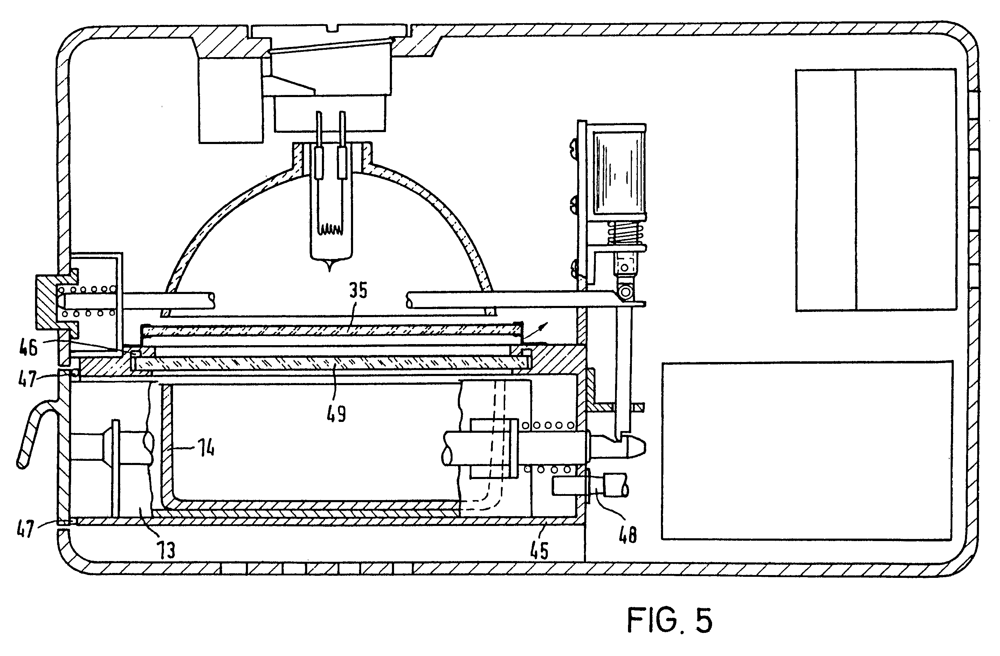

Bei den in Fig. 4 und 5 gezeigten Varianten des Bestrahlungsgerätes ist eine Evakuierung des Behandlungsortes vorgesehen, die beispielsweise dann erforderlich ist, wenn das Bestrahlungsobjekt aus einem Polymerisat besteht, auf dem sich während des Bestrahlungsvorgangs durch die Einwirkung von Sauerstoff eine Schmierschicht bildet.

In der Ausführungsform nach Fig. 4 ist zu diesem Zweck der Reflektor 14 durch eine Glasplatte 41 und eine Dichtung 42 nach oben vakuumdicht abgeschlossen. Die Glasplatte 41 ist für die verwendete Strahlung im Bereich um 460 nm hochdurchlässig. Geeignet sind insbesondere Quarzgläser mit entsprechender Durchlässigkeit und vorzugsweise hoher Wärmefestigkeit. In seiner Vorderwand weist der Reflektor 14 eine Öffnung mit einem Anschlußstutzen 43 auf, der über eine die Schubladen-Frontplatte durchsetzenden Schlauch 44 an eine (nicht gezeigte) Vakuumquelle angeschlossen ist. Zur Entleerung der Schublade nach der Behandlung wird die Vakuumquelle abgeschaltet und die Schublade belüftet, so daß sich die Glasplatte 41 ohne weiteres abheben läßt. Die Abschaltung der Vakuumquelle erfolgt vorzugsweise automatisch durch die oben beschriebene Steuerschaltung 15.

Bei der Ausführungsform nach Fig. 5 ist die Schublade 13 in einen mit Ausnahme seiner vorderen Öffnung geschlossenen Gehäuseteil 45 eingesetzt, der nach oben hin durch eine Glasplatte 49 und eine Dichtung 46 vakuumdicht verschlossen ist. Die vordere Öffnung des Gehäuseteils 45 ist mit einer Dichtung 47 versehen, an der die Frontplatte der Schublade 13 im geschlossenen Zustand anliegt. Ein Vakuumanschluß 48 ist in die hintere Wand des Gehäuseteils 45 eingesetzt und an eine (nicht gezeigte) Vakuumquelle angeschlossen, die in diesem Fall innerhalb des Gehäuses 10 untergebracht sein kann. Über der Glasplatte 49 ist wie in Fig. 2 und 4 das Filter 35 derart angeordnet, daß es allseitig von Kühlluft umspült wird.

Die Ausführungsform nach Fig. 5 ist gegenüber derjenigen nach Fig. 4 insofern von Vorteil, als der Vakuumanschluß an einem festen Geräteteil erfolgt und damit die Bewegung nicht behindert.

Obwohl in Fig. 4 und 5 nicht eigens dargestellt, ist auch bei diesen Ausführungsformen ebenso wie bei dem anhand von Fig. 2 erläuterten Ausführungsbeispiel in der Mitte der Schublade ein zur Aufnahme des Bestrahlungsobjektes dienender Tisch 23 angeordnet. Im Gegensatz zu Fig. 2 ist jedoch bei den Ausführungsformen nach Fig. 4 und 5 die Schublade 13 nicht mit einer Lüftungsöffnung 22 versehen, sondern geschlossen.

**Patentansprüche**

1. Gerät zum Behandeln von Zahnersatzteilen mit Strahlung eines ausgewählten Spektralbereichs, mit einer Lampe (11) zur Erzeugung einer den ausgewählten Spektralbereich enthaltenden Strahlung, die im Wellenlängenbereich unter ca. 500 nm selektiv reflektiert wird, und mit einem die Lampe teilweise umgebenden ersten Reflektor (12), der die Strahlung des ausgewählten Spektralbereichs auf einen Behandlungsort reflektiert, dadurch gekennzeichnet, daß am Behandlungsort eine Aufnahme (23) für Zahnersatzteile vorgesehen und auf der von dem im wesentlichen paraboloidförmigen ersten Reflektor (12) abgewandten Seite der Aufnahme (23) ein als gleichmäßig bestrahlender hohler Spiegel ausgebildeter, die Aufnahme umgebender zweiter Reflektor (14) angeordnet ist, der die Strahlung des ausgewählten Spektralbereichs reflektiert, wobei mindestens einer der beiden Reflektoren (12, 14) Strahlung im Wellenlängenbereich oberhalb etwa 500 nm transmittiert.

2. Gerät nach Anspruch 1, dadurch gekennzeichnet, daß der ausgewählte Spektralbereich oberhalb ca. 400 nm liegt.

3. Gerät nach Anspruch 1 oder 2, dadurch gekennzeichnet, daß der zweite Reflektor (14) diffus reflektierend ausgebildet ist.

4. Gerät nach Anspruch 3, dadurch gekennzeichnet, daß die beiden Reflektoren (12, 14) die Aufnahme (23) im wesentlichen vollständig umgeben.

5. Gerät nach einem der Ansprüche 1 bis 4, dadurch gekennzeichnet, daß zwischen den beiden Reflektoren (12, 14) auf der der Lampe (11) zugewandten Seite der Aufnahme (23) ein Luftspalt vorgesehen ist und daß der zweite Reflektor (12) mit einer von der Aufnahme (23) verdeckten Lüftungsöffnung (22) versehen ist.

6. Gerät nach Anspruch 5, dadurch gekennzeichnet, daß zwischen den beiden Reflektoren (12, 14) ein Strahlung oberhalb des ausgewählten Spektralbereichs absorbierendes Filter (35) angeordnet ist.

7. Gerät nach einem der Ansprüche 1 bis 6, dadurch gekennzeichnet, daß die Aufnahme (23) einen mittleren konvexen reflektierenden Teil (25) aufweist.

8. Gerät nach einem der Ansprüche 1 bis 7, dadurch gekennzeichnet, daß die Lampe (11) auswechselbar in den ersten Reflektor (12) eingesetzt ist.

9. Gerät nach einem der Ansprüche 1 bis 8, dadurch gekennzeichnet, daß der erste Reflektor (12) so eingebaut ist, daß er die Strahlung der Lampe (11) nach unten reflektiert und daß zwischen der Lampe (11) und dem ersten Reflektor (12) ein Spalt zum Durchtritt zirkulierender Kühlluft vorgesehen ist.

10. Gerät nach einem der Ansprüche 1 bis 9, dadurch gekennzeichnet, daß der Behandlungsort an eine Vakuumquelle anschließbar ist.

11. Gerät nach einem der Ansprüche 1 bis 10, dadurch gekennzeichnet, daß der zweite Reflektor (14) in einer die zu behandelnden Zahnersatzteile aufnehmenden Schublade (13) angeordnet ist, die relativ zu einem den ersten Reflektor (12) stationär enthaltenden Gehäuse (10) bewegbar ist.

12. Gerät nach Anspruch 11, dadurch gekennzeichnet, daß die Schublade (13) durch eine obere Glasplatte (41) vakuumdicht verschließbar ist und einen Vakuumanschluß (43) aufweist.

13. Gerät nach Anspruch 11, dadurch gekennzeichnet, daß die Schublade (13) in einen vakuumdichten, mit einem Vakuumanschluß (48) versehenen Gehäuseteil (45) eingesetzt ist, an dessen Stirnseite eine Dichtung (47) für die Frontplatte der Schublade (13) angeordnet ist.

14. Gerät nach Anspruch 13, dadurch gekennzeichnet, daß der Gehäuseabschnitt (45) nach oben durch eine vakuumdicht eingesetzte strahlungsdurchlässige Glasplatte (49) abgeschlossen ist, über der ein von Kühlluft umspültes Wärmefilter (35) angeordnet ist.

15. Gerät nach einem der Ansprüche 11 bis 14, gekennzeichnet durch eine Steuerschaltung (15), die die Lampe (11) bei Ablauf einer vorgebbaren Zeitspanne nach ihrem Einschalten abschaltet.

16. Gerät nach Anspruch 15, dadurch gekennzeichnet, daß die Steuerschaltung (15) bei Ablauf der Zeitspanne einen die Schublade (13) öffnenden Auslösemechanismus (30 ... 33) betätigt.

17. Gerät nach Anspruch 15 oder 16, dadurch gekennzeichnet, daß die Steuerschaltung (15) eine während der Zeitspanne laufende Zähleranzeige (40) steuert und einen Signalkreis enthält, der bei Unterbrechung des Lampenstroms die Zähleranzeige (40) anhält und intermittierend beaufschlagt.

## Claims

1. An apparatus for treating dental prosthetic parts with radiation of a selected spectral range, including a lamp (11) for producing a radiation containing the selected spectral range, which is reflected selectively in a wavelength range below about 500 nm, and a first reflector (12) partially surrounding the lamp which reflects the radiation of the selected spectral range onto a location of treatment, characterized in that a means (23) for receiving dental prosthetic parts is provided at the location of treatment, and a second reflector (14) surrounding the receiving means and formed as a uniformly irradiating hollow mirror is disposed on the side of the receiving means (23) remote from the substantially paraboloidshaped first reflector (12), the second reflector reflecting the radiation of the selected spectral range, and at least one of the two reflectors (12, 14) transmitting radiation in the wavelenght range above about 500 nm.

2. The apparatus of claim 1, characterized in that the selected spectral range is above about 400 nm.

3. The apparatus of claim 1 or 2, characterized in that the second reflector (14) is formed diffusely reflecting.

4. The apparatus of claim 3, characterized in that the two reflectors (12, 14) substantially completely surround the receiving means (23).

5. The apparatus of any of claims 1 to 4, characterized in that an air gap is provided between the two reflectors (12, 14) on the side of the receiving means (23) facing the lamp (11), and that the second reflector (12) is provided with a ventilation opening (22) covered by the receiving means (23).

6. The apparatus of claim 5, characterized in that a filter (35) absorbing radiation above the selected spectral range is disposed between the two reflectors (12, 14).

7. The apparatus of any of claims 1 to 6, characterized in that the receiving means (23) includes a central convex reflecting portion (25).

8. The apparatus of any of claims 1 to 7, characterized in that the lamp (11) is replaceably mounted in the first reflector (12).

9. The apparatus of any of claims 1 to 8, characterized in that the first reflector (12) is so installed that it reflects the radiation of the lamp (11) downwardly, and that a gap for passing circulating cooling air is provided between the lamp (11) and the first reflector (12).

10. The apparatus of any of claims 1 to 9, characterized in that the location of treatment is connectable to a vacuum source.

11. The apparatus of any of claims 1 to 10, characterized in that the second reflector (14) is disposed within a drawer (13) receiving the dental prosthetic parts to be treated, the drawer being movable relatively to a housing (10) which contains the first reflector (12) in a stationary manner.

12. The apparatus of claim 11, characterized in that the drawer (13) is sealable in a vacuum-tight manner by an upper glass plate (41) and has a vacuum connection (43).

13. The apparatus of claim 11, characterized in that the drawer (13) is inserted in a vacuum-tight housing portion (45) provided with a vacuum connection (48), a sealing (47) for the front plate of the drawer (13) being disposed on the front of the housing portion.

14. The apparatus of claim 13, characterized in that the housing portion (45) has its upper side sealed by a radiation-transmissive glass plate (49) mounted in a vacuumtight manner, a heat-filter (35) scavenged by cooling air being disposed above the glass plate (49).

15. The apparatus of any of claims 11 to 14, characterized by a control circuit (15) which switches off the lamp (11) upon expiry of a given period of time after being switched on.

16. The apparatus of claim 15, characterized in that the control circuit (15) actuates upon expiry of the periode of time a release mechanism (30 . . . 33) which opens the drawer (13).

17. The apparatus of claim 15 or 16, characterized in that the control circuit (15) controls a counter display (40) running during the period of time, and includes a signal circuit which, upon interruption of the lamp current, stops and intermittently operates the counter display (40).

## Revendications

1. Appareil pour traiter des pièces de prothèse dentaire par rayonnement de domaine spectral choisi, comportant une lampe (11) pour produire un rayonnement, contenant le domaine spectral choisi, qui est réfléchi sélectivement dans une plage de longueurs d'ondes inférieures à environ 500 nm et un premier réflecteur (12), entourant partiellement la lampe, qui réfléchit le rayonnement de domaine spectral choisi sur un emplacement de traitement, caractérisé par le fait qu'à l'emplacement de traitement il est prévu un récepteur (23) pour les pièces de prothèse dentaire et que, sur le côté du récepteur (23) opposé au premier réflecteur (12) sensiblement en forme de paraboloïde, est disposé un deuxième réflecteur (14) entourant le récepteur, réalisé sous forme d'un miroir creux à rayonnement uniforme qui réfléchit le rayonnement de domaine spectral choisi, l'un au moins des deux réflecteurs (12, 14) transmettant le rayonnement dans une plage de longueurs d'ondes supérieures à environ 500 nm.

2. Appareil selon la revendication 1, caractérisé par le fait que le domaine spectral choisi se trouve au-dessus d'environ 400 nm.

3. Appareil selon la revendication 1 ou 2, caractérisé par le fait que le deuxième réflecteur est du type à réflexion diffuse.

4. Appareil selon la revendication 3, caractérisé par le fait que les deux réflecteurs (12, 14) entourent sensiblement complètement le récepteur (23).

5. Appareil selon l'une des revendications 1 à 4, caractérisé par le fait qu'entre les deux réflecteurs (12, 14) il est prévu une fente d'aération sur le côté de la lampe (11) tourné vers le récepteur (23), et que le deuxième réflecteur (14) est muni d'un orifice d'aération (22) recouvert par le récepteur (23).

6. Appareil selon la revendication 5, caractérisé par le fait qu'entre les deux réflecteurs (12, 14) est disposé un filtre (35) absorbant le rayonnement au-dessus du domaine spectral choisi.

7. Appareil selon l'une des revendications 1 à 6, caractérisé par le fait que le récepteur (23) présente une partie centrale convexe réfléchissante (25).

8. Appareil selon l'une des revendications 1 à 7, caractérisé par le fait que la lampe (11) est mise en place de façon interchangeable dans le premier réflecteur (12).

9. Appareil selon l'une des revendications 1 à 8, caractérisé par le fait que le premier réflecteur (12) est monté de manière à réfléchir vers le bas le rayonnement de la lampe (11), et qu'entre la lampe (11) et le premier réflecteur (12) est prévue une fente pour le passage d'air de refroidissement circulant.

10. Appareil selon l'une des revendications 1 à 9, caractérisé par le fait que l'emplacement de traitement est susceptible d'être raccordé à une source de vide.

11. Appareil selon l'une des revendications 1 à 10, caractérisé par le fait que le deuxième réflecteur (14) est disposé dans un tiroir (13) recevant les pièces de prothèse dentaire à traiter, ledit tiroir étant déplaçable par rapport à un logement (10) fixe contenant le premier réflecteur (12).

12. Appareil selon la revendication 11, caractérisé par le fait que le tiroir (13) est susceptible d'être fermé de manière étanche au vide par une plaque de verre supérieure (41) et présente un raccord de vide (43).

13. Appareil selon la revendication 11, caractérisé par le fait que le tiroir (13) et mis en place dans une partie de logement (45) étanche au vide, munie d'un raccord de vide (48), et sur le côté frontal de laquelle est disposé un joint (47) pour la plaque frontale du tiroir (13).

14. Appareil selon la revendication 13, caractérisé par le fait que la partie de logement (45) est fermée vers le haut par une plaque de verre (49) perméable au rayonnement et mise en place de manière étanche au vide au-dessus de laquelle est disposé un filtre thermique (35) balayé par l'air de refroidissement.

15. Appareil selon l'une des revendications 11 à 14, caractérisé par un circuit de commande (15) qui éteint la lampe (11) après un intervalle de temps prédéterminable suivant son allumage.

16. Appareil selon la revendication 15, caractérisé par le fait que le circuit de commande (15) actionne, au bout de l'intervalle de temps, un mécanisme de déclenchement (30 . . . 33) ouvrant le tiroir (13).

17. Appareil selon la revendication 15 ou 16, caractérisé par le fait que le circuit de commande (15) commande un afficheur de comptage (40 marchant pendant l'intervalle de temps et contient un circuit de signal qui, en cas d'interruption du courant de la lampe, arrête l'indicateur de comptage (40) et le fait fonctionner de façon intermittente.

FIG. 1

FIG. 2

FIG. 3

FIG. 4

FIG. 5

35

46

47

49

14

47

73

45

48

0 037 461